# EUROPEAN PATENT APPLICATION

(11) **EP 4 819 742 A1**
(43) Date of publication of application: **07.10.2026**
(21) Application number: 24899434.5
(22) Date of filing: 24.09.2024
(51) Int. Cl.: H04W 72/54

(54) **DATA PROCESSING METHOD, AND DEVICE AND MEDIUM**

(30) Priority: 05.12.2023 CN 202311665358
(71) Applicant: ZTE Corporation, Shenzhen, Guangdong 518057 (CN)
(72) Inventor: LIU, Yu, Shenzhen, Guangdong 518057 (CN); XIE, Feng, Shenzhen, Guangdong 518057 (CN)
(74) Representative: Savi, Massimiliano
(86) International application number: PCT/CN2024/120855
(87) International publication number: WO 2025/118790

(57) **Abstract**

The present application relates to but is not limited to the technical field of communications. Provided are a data processing method, and a device and a medium. The data processing method comprises: acquiring data to be transmitted (S210); and constructing a transport block on the basis of said data, wherein the transport block comprises a plurality of transport sub-blocks, the plurality of transport sub-blocks comprise at least one type of transport sub-blocks, each transport sub-block comprises a data field and a data sub-header located before the data field, the data field carries data, the data sub-header at least carries a logical channel ID field, and the type of the transport sub-block is related to the value of the logical channel ID field (S220).

## Description

### CROSS-REFERENCE TO RELATED APPLICATION

This application is based on and claims priority to Chinese Patent Application No. 202311665358.1, filed on December 5, 2023, the entire content of which is hereby incorporated by reference into this application.

### TECHNICAL FIELD

Embodiments of the present application relate to the field of communication technologies, and in particular, to a data processing method, a device, and a medium.

### BACKGROUND

Currently, a 5G-based wireless communication system typically transmits session-type user data, such as voice call data, video call data, and internet data. Since a 5G user plane protocol stack typically includes four protocol layers, namely a Service Data Adaptation Protocol (SDAP), a Packet Data Convergence Protocol (PDCP), a Radio Link Control (RLC), and a Medium Access Control (MAC), the data being transmitted needs to be sequentially processed by the SDAP, PDCP, RLC, and MAC layers in the user plane protocol stack. However, when data is processed at each layer of the protocol stack, a protocol header is added, which increases memory consumption and data processing latency. In addition, when data is transmitted between protocol layers, data copying is required, which also increases memory consumption and data processing latency. Therefore, in the related art that adopts the multi-layer protocol stack data processing method, in scenarios having a relatively high transmission rate and a relatively low transmission latency requirement, the data processing efficiency and the overall processing performance are low.

### SUMMARY

Embodiments of the present application provide a data processing method, a device, and a medium, which can improve a data processing rate and reduce data processing latency in scenarios having a relatively high transmission rate and a relatively low transmission latency requirement, thereby effectively improving data processing performance.

In a first aspect of the present application, an embodiment provides a data processing method, the method including: acquiring data to be transmitted; and constructing a transport block according to the data, where the transport block includes a plurality of sub-transport blocks, the plurality of sub-transport blocks include at least one type of sub-transport block, each of the sub-transport blocks includes a data field and a data sub-header located before the data field, the data field carries the data, the data sub-header carries at least a logical channel ID field, and a type of the sub-transport block is related to a value of the logical channel ID field.

In a second aspect of the present application, an embodiment provides an electronic device, including one or more processors; and a memory having one or more programs stored therein, wherein the one or more programs, when executed by the one or more processors, cause the one or more processors to perform the data processing method described in the first aspect above.

In a third aspect of the present application, an embodiment provides a computer-readable storage medium, storing a computer program which, when executed by a processor, causes the processor to perform the data processing method described in the first aspect above.

In the embodiments of the present application, the data to be transmitted is acquired, and the transport block is constructed according to the data. The transport block includes a plurality of sub-transport blocks, the plurality of sub-transport blocks include at least one type of sub-transport block, each sub-transport block includes a data field and a data sub-header located before the data field, the data field carries the data, the data sub-header carries at least a logical channel ID field, and the type of the sub-transport block is related to the value of the logical channel ID field. The present application directly constructs the sub-transport block based on the data, and each sub-transport block includes a data sub-header. Compared with the existing scheme in which a protocol header needs to be added during processing at each layer of the protocol stack, memory consumption and data processing latency can be effectively reduced. Furthermore, the sub-transport block, which is constructed based on the data and which includes the data field and the data sub-header located before the data field, can reduce the number of times of data copying, thereby effectively reducing memory consumption and data processing latency. Therefore, compared with the related art, the embodiments of the present application can improve the data processing rate and reduce the data processing latency in scenarios having a relatively high transmission rate and a relatively low transmission latency requirement, thereby effectively improving data processing performance.

### BRIEF DESCRIPTION OF DRAWINGS

The accompanying drawings are used to provide a further understanding of the technical solutions of the present application, and constitute a part of the specification. The drawings are used to explain the technical solutions of the present application together with the embodiments of the present application, and do not constitute a limitation to the technical solutions of the present application.
FIG. 1 is a schematic diagram of data processing based on a multi-layer protocol stack in the related art;
FIG. 2 is a schematic flowchart of a data processing method according to an embodiment of the present application;
FIG. 3 is a schematic structural diagram of determining a transport block based on sub-transport blocks each constructed to include a data field and a data sub-header, according to an embodiment of the present application;
FIG. 4 is a first schematic structural diagram of a data sub-header in a case where a value of a logical channel ID field is a first value, according to an embodiment of the present application;
FIG. 5 is a second schematic structural diagram of a data sub-header in a case where a value of a logical channel ID field is a first value, according to an embodiment of the present application;
FIG. 6 is a third schematic structural diagram of a data sub-header in a case where a value of a logical channel ID field is a first value, according to an embodiment of the present application;
FIG. 7 is a fourth schematic structural diagram of a data sub-header in a case where a value of a logical channel ID field is a first value, according to an embodiment of the present application;
FIG. 8 is a first schematic structural diagram of a data sub-header in a case where a value of a logical channel ID field is a second value, according to an embodiment of the present application;
FIG. 9 is a second schematic structural diagram of a data sub-header in a case where a value of a logical channel ID field is a second value, according to an embodiment of the present application;
FIG. 10 is a third schematic structural diagram of a data sub-header in a case where a value of a logical channel ID field is a second value, according to an embodiment of the present application;
FIG. 11 is a fourth schematic structural diagram of a data sub-header in a case where a value of a logical channel ID field is a second value, according to an embodiment of the present application;
FIG. 12 is a schematic structural diagram of a data sub-header in a case where a value of a logical channel ID field is a third value, according to an embodiment of the present application; and
FIG. 13 is a schematic structural diagram of an electronic device according to an embodiment of the present application.

### DETAILED DESCRIPTION

To make the objectives, technical solutions, and advantages of the present application clearer, the present application will be further described in detail below in conjunction with the accompanying drawings and embodiments. It should be understood that the specific embodiments described herein are only intended to explain the present application, and are not intended to limit the present application.

It should be understood that, in the description of the embodiments of the present application, if there is any description of "first", "second", or the like, such terms are only used for the purpose of distinguishing technical features, and shall not be construed as indicating or implying relative importance, or as implicitly indicating the number of indicated technical features, or as implicitly indicating an order of the indicated technical features. "At least one" means one or more, and "a plurality of" means two or more. "And/or" describes an association relationship of associated objects, and indicates that three relationships may exist; for example, A and/or B may indicate the following three cases: A exists alone, both A and B exist, and B exists alone, where A and B may be singular or plural. The character "/" generally indicates an "or" relationship between the associated objects. "At least one of the following" and similar expressions refer to any combination of these items, including a single item or any combination of a plurality of items. For example, at least one of a, b, and c may represent: a, b, c, a and b, a and c, b and c, or a and b and c, where a, b, and c may be singular or plural.

In addition, the technical features involved in the various embodiments of the present application described below may be combined with one another, provided that they do not conflict with one another.

In order to facilitate understanding of the solutions of the embodiments of the present application, and to make the description of the following embodiments clear and concise, a brief introduction to the related art is first given.

MAC: refers to an entity that, in wireless communication systems such as Long Term Evolution (LTE) and 5G, is responsible for processing and managing the Media Access Control (MAC) protocol in a radio access technology. The MAC achieves efficient transmission and scheduling of user data by controlling and managing physical layer resources, while ensuring network performance and efficiency. A MAC Control Element (Media Access Control-Control Element, MAC-CE) typically refers to control information sent by a base station or a UE in a wireless communication system.

Air interface transmission: refers to a wireless interface in a wireless communication system, i.e., a radio channel. Air interface transmission is a physical transmission medium used in mobile communication to transmit wireless signals. In a mobile communication system, air interface transmission is used for bidirectional wireless signal transmission between a mobile device (such as a mobile phone) and a base station. Air interface transmission is the most critical and fundamental part of a mobile communication system, and is responsible for carrying voice, data, and various other services.

Protocol Data Unit (PDU): refers to a data unit transferred from one protocol layer to another protocol layer in a communication network. In the 5G user plane model, each protocol layer adds specific header information during data processing, forming a PDU for transmission. At the receiving end, this header information is removed to obtain the original service data.

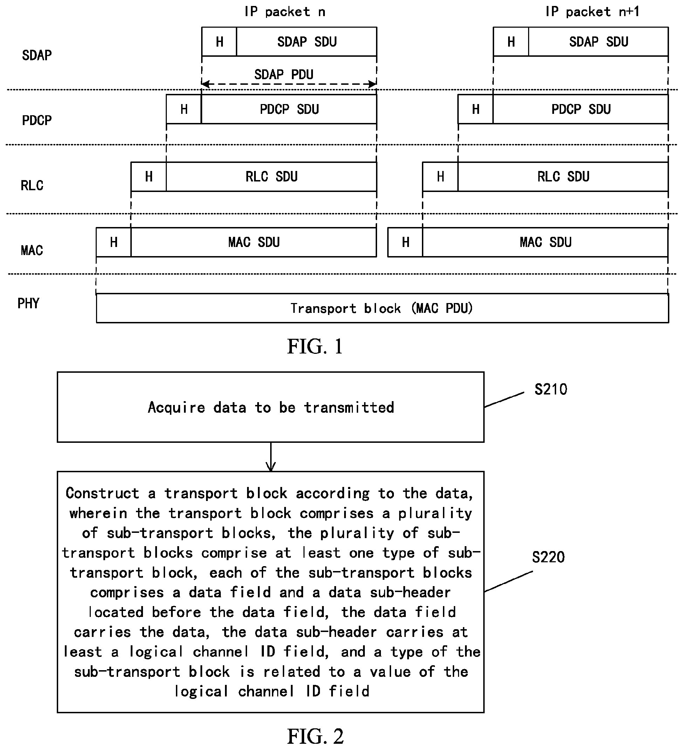

Currently, a 5G-based wireless communication system typically transmits session-type user data, such as voice call data, video call data, and internet data. Since the 5G user plane protocol stack typically includes four protocol layers, namely the Service Data Adaptation Protocol (SDAP), the Packet Data Convergence Protocol (PDCP), the Radio Link Control (RLC), and the Medium Access Control (MAC), the data being transmitted needs to be sequentially processed by the SDAP, PDCP, RLC, and MAC layers in the user plane protocol stack. However, when data is processed at each layer of the protocol stack, a protocol header is added. As shown in FIG. 1, for data based on the Internet Protocol (IP protocol) (e.g., IP data packet n, IP data packet n+1, etc.), when data processing is performed in a multi-layer protocol stack manner, protocol headers (i.e., the protocol header H added at each layer) are added at the SDAP layer, the PDCP layer, the RLC layer, and the MAC layer, respectively, and a PDU data packet is output. For the transmitting end, the data goes from top to bottom, and is finally processed by the MAC layer, and a MAC PDU is output to the physical layer (PHY), and is then transmitted via the air interface. Therefore, by adding a protocol header at each layer of the protocol stack in the related art, memory consumption and data processing latency are liable to increase.

Existing wireless communication systems (such as 5G) have a latency of 1 millisecond during air interface transmission and a peak transmission rate of 10 gigabits per second (Gbit/s, i.e., an amount of data transmitted per second is 10 gigabits). However, future wireless communication systems (such as 6G), being required to support new services such as AI, sensing, and computing power, and being required to support extremely reliable and low-latency services, require that the air interface transmission latency be reduced to 0.1 millisecond, and that the peak transmission rate be increased to 100 Gbit/s; that is, compared with 5G, 6G needs a performance improvement of more than 10 times. However, by adding a protocol header at each layer of the protocol stack in the related art, memory consumption and data processing latency are liable to increase. Furthermore, when data is transmitted between protocol layers, data copying is required, which also increases memory consumption and data processing latency. Therefore, since future wireless communication systems support new services such as AI, sensing, and computing power, and application scenarios are also extended to various vertical industries, a higher data transmission rate and a lower data processing latency are required. The multi-layer protocol stack processing manner of adding a header to data layer by layer in the related art can no longer meet the future data processing performance requirements in scenarios having a relatively high transmission rate and a relatively low transmission latency requirement.

To solve the above problems, embodiments of the present application provide a data processing method. The method constructs a sub-transport block based on the acquired data to be transmitted, where the sub-transport block includes a data field and a data sub-header located before the data field, the data field carries the data, and the data sub-header carries a logical channel ID field. The method can improve a data processing rate and reduce data processing latency in scenarios having a relatively high transmission rate and a relatively low transmission latency requirement, thereby effectively improving data processing performance.

The embodiments described in the present application may be implemented in a communication system, such as at least one of the following systems: a Global System for Mobile Communications (GSM) or any other second-generation cellular communication system; a Universal Mobile Telecommunications System (UMTA, 3G) based on basic Wideband Code Division Multiple Access (W-CDMA); High-Speed Packet Access (HSPA); Long Term Evolution (LTE); Advanced LTE; a system based on the IEEE 802.11 specification; a system based on the IEEE 802.15 specification; and/or a fifth-generation (5G) mobile or cellular communication system; as well as future mobile communication systems (such as 6G). However, the embodiments are not limited to the systems given in the above examples; rather, those skilled in the art may apply the solutions to other communication systems having the necessary properties.

In the data processing method of the embodiments of the present application, referring to FIG. 2, an implementation process of a data processing method provided by an embodiment of the present application may include, but is not limited to, the following steps S210 to S220, and each of the steps is introduced sequentially below.

At step S210, data to be transmitted is acquired.

It should be noted that the data to be transmitted generally refers to data sent and received by a user in network communication.

It should be noted that the data to be transmitted described in the embodiments of the present application may include the following types of data: a data packet, a data block, a variable-length MAC-CE, or a fixed-length MAC-CE.

The data packet described in the embodiments of the present application refers to data sent by the transmitting end in the form of packets. The data packet has a corresponding SN, and the receiving end can receive the data packets in order based on the SN, and notify the transmitting end through the SN that the data has been correctly received. The data packet may specifically be an IP data packet, high-layer signaling, or a data packet generated inside Layer 2 (i.e., the data link layer). The data block described in the embodiments of the present application may specifically be Artificial Intelligence (Al)-related data, sensing data, data of a computing power service in a wireless communication system, or other data generated inside Layer 2.

The variable-length MAC-CE described in the embodiments of the present application refers to data of which the length of the MAC-CE is not fixed and can be dynamically increased or decreased as needed. The use of the variable-length MAC-CE can ensure transmission efficiency while flexibly transmitting control information of different lengths.

The fixed-length MAC-CE described in the embodiments of the present application refers to data of which the length of the MAC-CE is fixed and cannot be dynamically increased or decreased. The fixed-length MAC-CE can make the transmission process simpler and more reliable, but may waste certain transmission resources.

It should be noted that the embodiments of the present application do not specifically limit the specific protocol adopted for the data to be transmitted.

At step S220, a transport block is constructed according to the data, where the transport block includes a plurality of sub-transport blocks, the plurality of sub-transport blocks include at least one type of sub-transport block, each sub-transport block includes a data field and a data sub-header located before the data field, the data field carries the data, the data sub-header carries at least a logical channel ID field, and a type of the sub-transport block is related to a value of the logical channel ID field.

It is understood that the data here is the data to be transmitted as expressed in the above embodiments, and details thereof are not repeated here. The sub-transport block refers to a structure that is encapsulated based on the data and a corresponding data sub-header and that is used to transmit the data. The Logical Channel IDentification (LCID) field refers to a field used to determine a value of a logical channel to which the sub-transport block corresponds. The data field refers to a field used to store the acquired data to be transmitted.

It should be noted that the type of the sub-transport block is related to the value of the logical channel ID field, i.e., the type of the sub-transport block can be determined by the value of the logical channel ID field. The value of the logical channel ID field refers to a numerical value used to mark a Logical CHannel (LCH) into which the data is divided. For example, the types of the sub-transport block include three types, and each type of sub-transport block may correspond to a plurality of logical channels. Each type of sub-transport block corresponds to one format of data sub-header, and the logical channel ID fields corresponding to the three types of data sub-headers may be set to three different values, such as 0, 1, and 2, which are not specifically limited here.

It should be noted that one Transport Block (TB) may include a plurality of sub-transport blocks, and thus a plurality of pieces of data can be transmitted simultaneously. Combining a plurality of sub-transport blocks into one transport block can effectively improve data processing efficiency. Furthermore, the length of the transport block can be dynamically scheduled and pre-configured, and the receiving end can know the length of the received transport block through authorization.

It should be noted that the original data refers to the complete data to be transmitted. When the original data is large, the data to be transmitted may also be a segment of data in the original data. Therefore, the data processing method of the present application can support segmented sending of data.

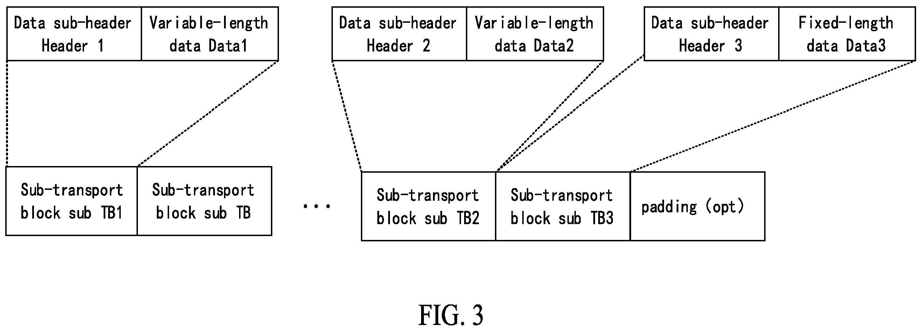

It should be noted that the sub-transport block includes a data field and a data sub-header located before the data field. As shown in FIG. 3, one transport block includes a plurality of sub-transport blocks (subTBs). After a plurality of pieces of data to be transmitted (e.g., variable-length data Data1, variable-length data Data2, and fixed-length data Data3) are acquired, the data to be transmitted is placed into the data field. A logical channel ID field corresponding to each piece of data is determined according to the logical channel into which the data to be transmitted is divided. A data sub-header is then determined based on the logical channel ID field. A sub-transport block corresponding to the data is constructed according to the data field and the data sub-header located before the data field. For example, sub-transport block subTB1 is constructed based on the variable-length data Data1 and a corresponding data sub-header Header1; sub-transport block subTB2 is constructed based on the variable-length data Data2 and a corresponding data sub-header Header2; and sub-transport block subTB3 is constructed based on the fixed-length data Data3 and a corresponding data sub-header Header3.

It should be noted that one transport block contains at least one sub-transport block of one type; one transport block may contain zero, one, or more sub-transport blocks of the three types, and when a plurality of sub-transport blocks are contained, the order of appearance of the plurality of sub-transport blocks in one transport block is not particularly limited.

It should be noted that variable-length data refers to data in which the length of the data field carrying the data is variable; in this case, a length field is required in the data sub-header, unless the sub-transport block is located at the end of the entire transport block. Fixed-length data refers to data in which the length of the data field carrying the data is fixed; in this case, the length field is not required in the data sub-header.

In a possible embodiment of the present application, in one transport block, the last sub-transport block may carry variable-length data without a length field. This is because the corresponding field lengths of the previous sub-transport blocks have been determined, and on the basis that the length of the transport block is fixed, the length of the data field carried in the last sub-transport block is the result obtained by subtracting the lengths of all previous sub-transport blocks from the length of the transport block.

It should be noted that in one transport block, it is not limited that only the last sub-transport block is a sub-transport block carrying a fixed-length data field; in the middle of the transport block, a sub-transport block carrying a fixed-length data field may also exist, so as to meet different service requirements. For example, for a fixed-length MAC-CE, what it carries is a sub-transport block carrying a fixed-length data field.

It is understood that, since the transport block has a fixed length, in order to make the transport block satisfy a length requirement, the present application may add a padding field after the last sub-transport block. The padding field refers to extra data added to satisfy a specific length or format requirement. Such padding is usually meaningless data, and is merely used to pad the length or format of the data packet, so as to meet the requirements of the protocol.

The advantage of the above embodiment is that, in order to avoid the problem that the existing multi-layer protocol stack requires adding a protocol header at each layer of the protocol stack during processing, thereby increasing memory consumption and data processing latency, the present application simplifies the existing four-layer protocol processing process of SDAP, PDCP, RLC, and MAC into a manner of constructing one data header, and unifies the data buffers of the existing four-layer protocols of SDAP, PDCP, RLC, and MAC into one data buffer. Meanwhile, the data states of the respective pieces of data are recorded. Based on this, the respective functional components can directly read this unified data area without copying the data many times, which greatly improves the data processing efficiency, and can effectively ensure the extremely high transmission rate and extremely low transmission latency requirements of future wireless communication systems.

In one embodiment, the value of the logical channel ID field is a first value; the data field carries variable-length data, which may be, for example, a data packet; and the data sub-header carries the following fields:
an LCID field, where the LCID field is used to indicate the logical channel ID corresponding to the data, and is a mandatory field;
an SN field, where the SN field is used to indicate a number corresponding to the data, and is a mandatory field;
an SI field, where the SI field is used to indicate segmentation information of the data, and is a mandatory field;
an SO field, where the SO field is used to indicate a position of a current data segment in the original data, i.e., a position of the first byte of the data segment in an original data buffer, and is an optional field;
an F field, where the F field is used to indicate whether an L field exists in the data sub-header, and, in the case where the L field exists, to indicate the length of the L field, and is a mandatory field;
an L field, where the L field is used to indicate a length of the data field, and is an optional field; and
an R field, which is a reserved bit and is set to 0.

It should be noted that the first value is used to mark that the data is classified as a data type carrying an SN. The first value may be a numerical value in any form, and is not specifically limited here. It is understood that, when the value of the logical channel ID field is the first value in the present application, the corresponding data sub-header may be expressed as an LCID/SN/SI/SO/F/L sub-header.

It should be noted that the length of the Logical Channel IDentification (LCID) field may be 6 bits or 8 bits. The present application may also define an eLCID field after the logical channel ID field, and the eLCID field may be 16 bits. For example, when the logical channel ID field takes a certain value, it indicates that there is an eLCID field immediately following the LCID. When the eLCID field exists, the data sub-header may be expressed as an LCID/eLCID/SN/SI/SO/F/L sub-header.

It should be noted that the length of the Sequence Number (SN) field may be configured by Radio Resource Control (RRC) signaling, and is a Radio Bearer-level parameter. The length of the SN field may be 6 bits, 12 bits, or 18 bits, etc., and is not specifically limited here.

It should be noted that the length of the Segmentation Information (SI) field may be 2 bits. The SI field is used to indicate segmentation information corresponding to the data packet. In other words, the SI field can indicate whether the data is original data or a piece of segmented data of an original data. Therefore, the values that the SI field can take and the corresponding descriptions are shown in Table 1 below.

**Table 1**

| SI Field Value | Description |
|---|---|
| 00 | The data domain contains all bytes, i.e., no segmentation |
| 01 | The data domain contains the first segment |
| 10 | The data domain contains the last segment |
| 11 | The data domain contains an intermediate segment |

It is understood that the data domain here refers to the data carried in the data field in the sub-transport block where the SI field is located. When the SI field is 00, it means that the original data is not segmented, and the data at this time is the complete original data. When the SI field is 01, it means that the data field in the sub-transport block where the SI field is located carries the first data segment of the original data. When the SI field is 10, it means that the data field in the sub-transport block where the SI field is located carries the last data segment of the original data. When the SI field is 11, it means that the data field in the sub-transport block where the SI field is located carries a certain intermediate data segment of the original data.

It should be noted that the length of the Segment Offset (SO) field may be 16 bits, and the data sub-header carries the SO field only when the value of the SI field indicates that the data is an intermediate segment or the last segment of the original data. The SO field is used to indicate the position of the data segment in the original data, i.e., the position of the first byte of the data segment in the original data buffer. In the first byte of the original data buffer, the value of SO is 0, i.e., the numbering starts from 0. With reference to Table 1, when the SI field is 00, this means that the data is not segmented data, and therefore the sub-transport block does not carry the SO field; when the SI field is 01, that is, the data is the first data segment of the original data, the sub-transport block also does not carry the SO field; and when the SI field is 10 or 11, this means that the data is an intermediate segment or the last segment of the original data, and the SO field is carried.

It should be noted that the length of the F field may be 2 bits. The F field is used to indicate whether an L field exists in the data sub-header, and, in the case where the L field exists, to indicate the length of the L field. The value of the F field may be any one of 00, 01, 10, and 11. When the F field is 00, this means that the L field occupies 0 bits, i.e., there is no L field; in this case, it means that all subsequent contents of one transport block belong to this sub-transport block, and there is no need to limit the length of the data field. When the F field is 01, this means that the L field occupies 8 bits; when the F field is 10, this means that the L field occupies 16 bits; and when the F field is 11, this means that the L field occupies 24 bits.

It should be noted that the length of the L field may be any one of 0 bits, 8 bits, 16 bits, 24 bits, etc., which is determined by the F field. The L field is used to indicate the length of the data field.

It should be noted that the data sub-header of the present application may further include an R field, and the R field is a reserved bit. The R field is mainly used for 8-bit alignment of the data sub-header. A reserved field refers to a field that is reserved in a communication protocol but not currently used. Such fields are usually reserved for future use, or are temporarily reserved to maintain compatibility with old versions. Therefore, the receiving end should ignore these fields when parsing data, and should not rely on their contents.

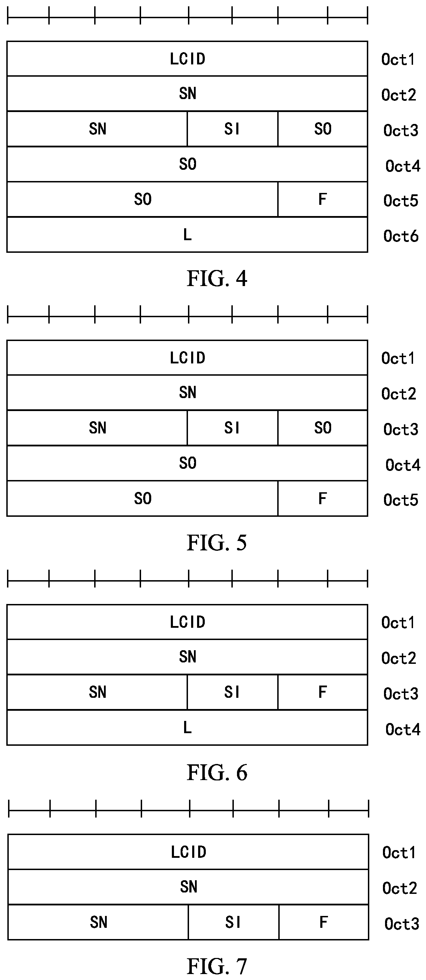

Example 1: In one embodiment, the value of the logical channel ID field in the data sub-header of one sub-transport block is the first value, that is, the format type of the data sub-header of the data is an LCID/SN/SI/SO/F/L sub-header. If the length of the logical channel ID field LCID is defined as 8 bits, the SN field is configured as 12 bits, and the data sub-header further carries an SI field, an SO field, an F field, and an L field (occupying 8 bits), the format of the data sub-header at this time is as shown in FIG. 4. The data sub-header has 6 bytes, where Oct1 represents the first 8 bits (or the first byte), Oct2 represents the second 8 bits (or the second byte), and so on, which is not repeated herein.

Example 2: In one embodiment, the value of the logical channel ID field in the data sub-header of one sub-transport block is the first value, and there is no L field, that is, the format type of the data sub-header of the data is an LCID/SN/SI/SO/F sub-header. If the length of the logical channel ID field LCID is defined as 8 bits, the SN field is configured as 12 bits, and the data sub-header further carries an SI field, an SO field, and an F field, without the L field, the format of the data sub-header at this time is as shown in FIG. 5. The data sub-header has 5 bytes, where Oct1 represents the first 8 bits (or the first byte), Oct2 represents the second 8 bits (or the second byte), and so on, which is not repeated herein.

Example 3: In one embodiment, the value of the logical channel ID field in the data sub-header of one sub-transport block is the first value, and there is no SO field, that is, the format type of the data sub-header of the data is an LCID/SN/SI/F/L sub-header. If the length of the logical channel ID field LCID is defined as 8 bits, the SN field is configured as 12 bits, and the data sub-header further carries an SI field, an F field, and an L field (occupying 8 bits), without the SO field, the format of the data sub-header at this time is as shown in FIG. 6. The data sub-header has 4 bytes, where Oct1 represents the first 8 bits (or the first byte), Oct2 represents the second 8 bits (or the second byte), and so on, which is not repeated herein.

Example 4: In one embodiment, the value of the logical channel ID field in the data sub-header of one sub-transport block is the first value, and there is no SO field or L field, that is, the format type of the data sub-header of the data is an LCID/SN/SI/F sub-header. If the length of the logical channel ID field LCID is defined as 8 bits, the SN field is configured as 12 bits, and the data sub-header further carries an SI field and an F field, without the SO field and the L field, the format of the data sub-header at this time is as shown in FIG. 7. The data sub-header has 3 bytes, where Oct1 represents the first 8 bits (or the first byte), Oct2 represents the second 8 bits (or the second byte), and so on, which is not repeated herein.

According to the contents of the above examples, the present application may, depending on whether the SO field, the L field, etc. exist, and on changes in the lengths of the LCID, the SN field, and the L field, enable the data sub-header to have a plurality of lengths and formats. For example, depending on whether the SO field and the L field exist, there are the following four sub-headers: an LCID/SN/SI/SO/F/L sub-header, an LCID/SN/SI/SO/F sub-header, an LCID/SN/SI/F/L sub-header, and an LCID/SN/SI/F sub-header.

In one embodiment, the value of the logical channel ID field is a second value; the data field carries variable-length data, which may be, for example, a data block or a variable-length MAC-CE; and the data sub-header carries the following fields:
an LCID field, where the LCID field is used to indicate the logical channel ID corresponding to the data, and is a mandatory field;
an SI field, where the SI field is used to indicate segmentation information of the data, and is a mandatory field;
an SO field, where the SO field is used to indicate a position of a current data segment in the original data, i.e., a position of the first byte of the data segment in an original data buffer, and is an optional field;
an F field, where the F field is used to indicate whether an L field exists in the data sub-header, and, in the case where the L field exists, to indicate the length of the L field, and is a mandatory field;
an L field, where the L field is used to indicate a length of the data field, and is an optional field; and
an R field, which is a reserved bit and is set to 0.

It should be noted that the second value is used to mark that the data is classified as a data type not carrying an SN. The second value may be a numerical value in any form, and is not specifically limited here.

It is understood that, when the value of the logical channel ID field is the second value in the present application, the corresponding data sub-header may be expressed as an LCID/SI/SO/F/L sub-header, and in this case, there is no SN field in the data sub-header.

It should be noted that the length of the LCID field may be 6 bits or 8 bits. The present application may also define an eLCID field after the logical channel ID field, and the eLCID field may be 16 bits. For example, when the logical channel ID field takes a certain value, it indicates that there is an eLCID field immediately following the LCID. When the eLCID field exists, the data sub-header may be expressed as an LCID/eLCID/SI/SO/F/L sub-header.

It should be noted that, when the value of the logical channel ID field is the second value, the bit lengths and meanings of the SI field, the SO field, the F field, and the L field carried in the data sub-header are the same as the bit lengths and meanings of the corresponding fields when the value of the logical channel ID field is the first value, which have been described in detail in the above embodiments, and details thereof are not repeated here.

It should be noted that, for the variable-length MAC-CE, in the existing New Radio (NR) protocol, the MAC-CE cannot be sent in segments, but the new structure of the transport block proposed in the present application constructs a corresponding sub-transport block based on the type of the variable-length MAC-CE, so that the variable-length MAC-CE can also be sent in segments.

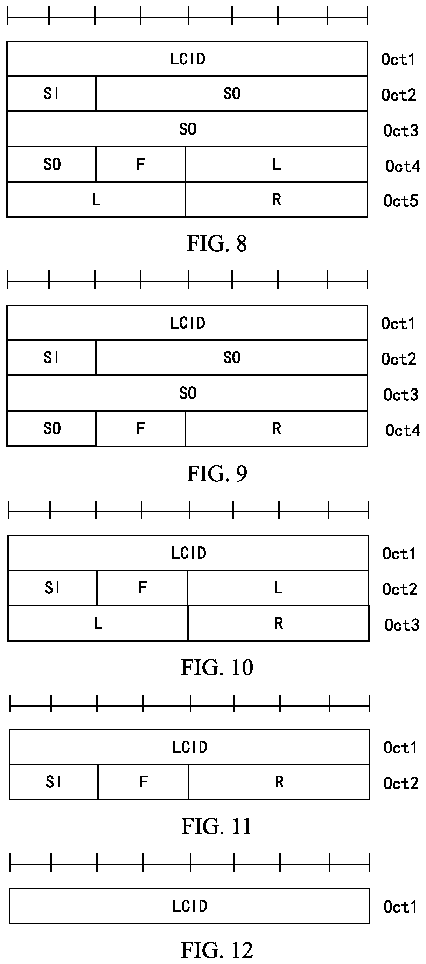

Example 5: In one embodiment, the value of the logical channel ID field in the data sub-header of one sub-transport block is the second value, that is, the format type of the data sub-header of the data is an LCID/SI/SO/F/L sub-header. If the length of the logical channel ID field LCID is defined as 8 bits, and the data sub-header further carries an SI field, an SO field, an F field, and an L field (occupying 8 bits), the format of the data sub-header at this time is as shown in FIG. 8. The data sub-header has 5 bytes, where Oct1 represents the first 8 bits (or the first byte), Oct2 represents the second 8 bits (or the second byte), and so on, which is not repeated herein.

Example 6: In one embodiment, the value of the logical channel ID field in the data sub-header of one sub-transport block is the second value, and there is no L field, that is, the format type of the data sub-header of the data is an LCID/SI/SO/F sub-header. If the length of the logical channel ID field LCID is defined as 8 bits, and the data sub-header further carries an SI field, an SO field, and an F field, without the L field, the format of the data sub-header at this time is as shown in FIG. 9. The data sub-header has 4 bytes, where Oct1 represents the first 8 bits (or the first byte), Oct2 represents the second 8 bits (or the second byte), and so on, which is not repeated herein.

Example 7: In one embodiment, the value of the logical channel ID field in the data sub-header of one sub-transport block is the second value, and there is no SO field, that is, the format type of the data sub-header of the data is an LCID/SI/F/L sub-header. If the length of the logical channel ID field LCID is defined as 8 bits, and the data sub-header further carries an SI field, an F field, and an L field (occupying 8 bits), without the SO field, the format of the data sub-header at this time is as shown in FIG. 10. The data sub-header has 3 bytes, where Oct1 represents the first 8 bits (or the first byte), Oct2 represents the second 8 bits (or the second byte), and so on, which is not repeated herein.

Example 8: In one embodiment, the value of the logical channel ID field in the data sub-header of one sub-transport block is the second value, and there is no SO field or L field, that is, the format type of the data sub-header of the data is an LCID/SI/F sub-header. If the length of the logical channel ID field LCID is defined as 8 bits, and the data sub-header further carries an SI field and an F field, without the SO field and the L field, the format of the data sub-header at this time is as shown in FIG. 11. The data sub-header has 2 bytes, where Oct1 represents the first 8 bits (or the first byte), and Oct2 represents the second 8 bits (or the second byte).

According to the contents of the above examples, the present application may, depending on whether the SO field, the L field, etc. exist, and on changes in the lengths of the LCID and the L field, enable the data sub-header to have a plurality of lengths and formats. For example, depending on whether the SO field and the L field exist, there are the following four sub-headers: an LCID/SI/SO/F/L sub-header, an LCID/SI/SO/F sub-header, an LCID/SI/F/L sub-header, and an LCID/SI/F sub-header.

In one embodiment, the value of the logical channel ID field is a third value; the data field carries fixed-length data, which may be, for example, a fixed-length MAC-CE; and the data sub-header carries only the following field:
an LCID field, where the LCID field is used to indicate the logical channel ID corresponding to the data, and is a mandatory field.

It should be noted that the third value is used to mark that the data is classified as a fixed-length data type. The third value may be a numerical value in any form, and is not specifically limited here.

It is understood that, when the value of the logical channel ID field is the third value in the present application, the corresponding data sub-header may be expressed as an LCID sub-header. In this case, the data sub-header does not carry any other field, and the data field carries fixed-length data.

It should be noted that the length of the LCID field may be 6 bits or 8 bits. The present application may also define an eLCID field after the logical channel ID field, and the eLCID field may be 16 bits. For example, when the logical channel ID field takes a certain value, it indicates that there is an eLCID field immediately following the LCID. When the eLCID field exists, the data sub-header may be expressed as an LCID/eLCID sub-header.

Example 9: In one embodiment, the value of the logical channel ID field in the data sub-header of one sub-transport block is the third value, that is, the format type of the data sub-header of the data is an LCID sub-header. If the length of the logical channel ID field LCID is defined as 8 bits, the format of the data sub-header at this time is as shown in FIG. 12. The data sub-header has 1 byte, where Oct1 represents this 1 byte.

According to the contents of the above examples, the present application determines the type of the data sub-header according to the value of LCID.

It should be noted that, as shown in FIG. 3, the data sub-header Header1 corresponding to the variable-length data Data1 may be the LCID/SN/SI/SO/F/L sub-header; the data sub-header Header2 corresponding to the variable-length data Data2 may be the LCID/SI/SO/F/L sub-header; and the data sub-header Header3 corresponding to the fixed-length data Data3 may be the LCID sub-header. Subsequently, a transport block is constructed according to the constructed sub-transport block subTB 1, sub-transport block subTB2, and sub-transport block subTB3.

It should be noted that, after the present application constructs the transport block according to the plurality of sub-transport blocks, the constructed transport block is placed in the data buffer, and the data in the buffer is encoded and output to the physical layer PHY, and is then sent out via air interface transmission, which can effectively improve data processing efficiency.

The embodiments of the present application define a new format of a transport block, in which each sub-transport block contains only one data sub-header. Compared with the existing scheme in which a protocol header needs to be added during processing at each layer of the protocol stack, the present application can effectively reduce memory consumption and data processing latency. Furthermore, constructing the transport block based on a unified data buffer can reduce the number of times of data copying, thereby effectively reducing memory consumption and data processing latency. The present application defines three sub-header formats (i.e., LCID/SN/SI/SO/F/L, LCID/SI/SO/F/L, and the LCID sub-header), and each sub-header format also has a plurality of variants, and the format of the data sub-header corresponding to the data can be determined according to the value of the LCID field. According to the above examples, the data sub-header is in a byte-aligned manner, and if alignment cannot be achieved, the R field may be used for padding. For the MAC-CE, the new transport block format defined in the present application can support segmented sending of MAC-CE. Furthermore, the newly defined transport block format can support a data sub-header format without the L field, thereby reducing the number of bits occupied by the sub-header. Therefore, compared with the related art, the embodiments of the present application can improve a data processing rate, reduce data processing latency, and effectively improve data processing performance, and can thereby better ensure the extremely high transmission rate and extremely low transmission latency requirements of future wireless communication systems.

It should be noted that, although the operations are described in a specific order in the drawings in the embodiments of the present application, this should not be understood as requiring that these operations be performed in the specific order shown or in serial order, or that all the operations shown be performed to obtain the desired result. In certain environments, multitasking and parallel processing may be advantageous.

In addition, in the embodiments of the present application, the descriptions of the respective embodiments each have their own emphasis, and for portions that are not described in detail or not described in a certain embodiment, reference may be made to the related descriptions of other embodiments.

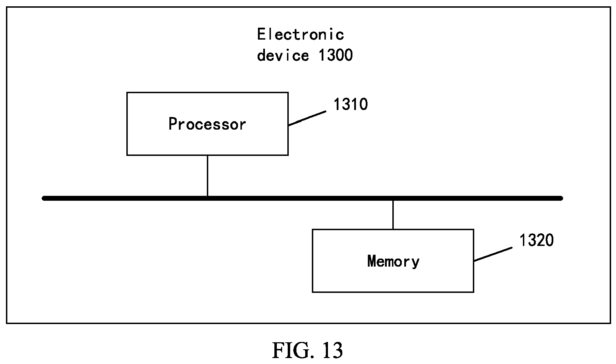

An embodiment of the present application further provides an electronic device. As shown in FIG. 13, the electronic device 1300 includes:
one or more processors 1310; and
a memory 1320 having one or more programs stored thereon, where when the one or more programs are executed by the one or more processors 1310, the one or more processors 1310 are caused to implement:
   the data processing method as applied to the above embodiments.

The memory 1320, as a non-transitory network system, may be used to store non-transitory software programs and non-transitory computer-executable programs. In addition, the memory 1320 may include a high-speed random access memory, and may also include a non-transitory memory, such as at least one disk storage device, a flash storage device, or other non-transitory solid-state storage device. In some embodiments, the memory 1320 may optionally include memories 1320 disposed remotely with respect to the processor 1310, and these remote memories 1320 may be connected to the processor 1310 via a network. Examples of the above network include, but are not limited to, the Internet, an intranet, a local area network, a mobile communication network, and combinations thereof.

The memory 1320 may be implemented in the form of a Read Only Memory (ROM), a static storage device, a dynamic storage device, or a Random Access Memory (RAM), etc. The memory 1320 may store an operating system and other application programs. When the technical solutions provided by the embodiments of the present specification are implemented through software or firmware, related program codes are stored in the memory 1320, and are invoked and executed by the processor 1310 to perform the methods of the embodiments of the present application.

The processor 1310 may be implemented in the form of a general-purpose Central Processing Unit (CPU), a microprocessor, an Application Specific Integrated Circuit (ASIC), or one or more integrated circuits, etc., and is used to execute related programs to implement the technical solutions provided by the embodiments of the present application.

In some embodiments, referring to FIG. 13, the electronic device further includes:
an input/output interface, used to implement input and output of information;
a communication interface, used to implement communication interaction between the present device and other devices, where the communication may be implemented in a wired manner (e.g., via USB, network cable, etc.), or in a wireless manner (e.g., via mobile network, WIFI, Bluetooth, etc.); and
a bus, used to transmit information between the respective components of the device (e.g., the processor 1310, the memory 1320, the input/output interface, and the communication interface);
where the processor 1310, the memory 1320, the input/output interface, and the communication interface can implement communication connections inside the device with each other through the bus.

An embodiment of the present application further provides a computer-readable storage medium having computer-executable instructions stored thereon, where the computer-executable instructions are used to execute and implement:
the data processing method as applied to the above embodiments.

An embodiment of the present application further provides a computer program product, including a computer program or computer instructions, where the computer program or computer instructions are stored in a computer-readable storage medium, and a processor of a computer device reads the computer program or computer instructions from the computer-readable storage medium, and the processor executes the computer program or computer instructions, so that the computer device executes and implements:
the data processing method as applied to the above embodiments.

The system architecture and application scenarios described in the embodiments of the present application are intended to more clearly illustrate the technical solutions of the embodiments of the present application, and do not constitute a limitation on the technical solutions provided by the embodiments of the present application. Those skilled in the art can know that, with the evolution of the system architecture and the emergence of new application scenarios, the technical solutions provided by the embodiments of the present application are equally applicable to similar technical problems.

Those of ordinary skill in the art may understand that all or part of the processes in the methods of the above embodiments can be implemented by instructing related hardware through a computer program; the computer program can be stored in a non-volatile computer-readable storage medium, and the computer program, when executed, may include the processes of the embodiments of the above methods. Any reference to a memory, storage, database, or other medium used in the various embodiments provided by the present application may include a non-volatile memory and/or a volatile memory. The non-volatile memory may include a Read Only Memory (ROM), a Programmable ROM (PROM), an Electrically Programmable ROM (EPROM), an Electrically Erasable Programmable ROM (EEPROM), or a flash memory. The volatile memory may include a Random Access Memory (RAM) or an external cache memory. By way of illustration and not limitation, the RAM is available in many forms, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM), a Memory Bus (Rambus) Direct RAM (RDRAM), a Direct Memory Bus Dynamic RAM (DRDRAM), and a Memory Bus Dynamic RAM (RDRAM), etc.

Those of ordinary skill in the art may understand that all or some of the steps and the systems in the methods disclosed above can be implemented as software, firmware, hardware, and appropriate combinations thereof. Some or all of the physical components may be implemented as software executed by a processor, such as a central processing unit, a digital signal processor, or a microprocessor, or be implemented as hardware, or be implemented as an integrated circuit, such as an application specific integrated circuit. Such software may be distributed on a computer-readable medium, and the computer-readable medium may include a computer storage medium (or non-transitory medium) and a communication medium (or transitory medium). As is known to those of ordinary skill in the art, the term computer storage medium includes volatile and non-volatile, removable and non-removable media implemented in any method or technology for storing information (such as computer-readable instructions, data structures, program modules, or other data). Computer storage media include, but are not limited to, RAM, ROM, EEPROM, flash memory or other memory technology, CD-ROM, Digital Versatile Disc (DVD) or other optical disc storage, magnetic cassettes, magnetic tape, magnetic disc storage or other magnetic storage devices, or any other medium that can be used to store the desired information and that can be accessed by a computer. In addition, it is well known to those of ordinary skill in the art that a communication medium typically contains computer-readable instructions, data structures, program modules, or other data in a modulated data signal such as a carrier wave or other transport mechanism, and may include any information delivery medium.

Some embodiments of the present application have been described above with reference to the accompanying drawings, but this is not intended to limit the scope of protection of the present application. Any modification, equivalent replacement, and improvement made by those skilled in the art without departing from the scope and essence of the present application shall fall within the scope of protection of the present application.

## Claims

1. A data processing method, comprising:
acquiring data to be transmitted; and
constructing a transport block according to the data, wherein the transport block comprises a plurality of sub-transport blocks, the plurality of sub-transport blocks comprise at least one type of sub-transport block, each of the sub-transport blocks comprises a data field and a data sub-header located before the data field, the data field carries the data, the data sub-header carries at least a logical channel ID field, and a type of the sub-transport block is related to a value of the logical channel ID field.

2. The method of claim 1, wherein the value of the logical channel ID field is a first value; the data sub-header further carries the following fields:
an SN field, wherein the SN field is configured to indicate a number corresponding to the data;
an SI field, wherein the SI field is configured to indicate segmentation information of the data; and
an F field, wherein the F field is configured to indicate whether an L field exists in the data sub-header, and in response to the L field existing, indicate a length of the L field.

3. The method of claim 2, wherein in response to a value of the SI field indicating that the data is an intermediate segment or a last segment of original data, the data sub-header further carries the following field:
an SO field, wherein the SO field is configured to indicate a position of a data segment in the original data.

4. The method of claim 2, wherein the data sub-header further carries the following field:
an L field, wherein the L field is configured to indicate a length of the data field.

5. The method of claim 1, wherein the value of the logical channel ID field is a second value; the data sub-header further carries the following fields:
an SI field, wherein the SI field is configured to indicate segmentation information of the data; and
an F field, wherein the F field is configured to indicate whether an L field exists in the data sub-header, and in response to the L field existing, indicate a length of the L field.

6. The method of claim 5, wherein in response to a value of the SI field indicating that the data is an intermediate segment or a last segment of original data, the data sub-header further comprises:
an SO field, wherein the SO field is configured to indicate a position of a data segment in the original data.

7. The method of claim 5, wherein the data sub-header further comprises:
an L field, wherein the L field is configured to indicate a length of the data field.

8. The method of any of claims 1 to 7, wherein the data sub-header further comprises an R field, wherein the R field is a reserved bit.

9. The method of claim 1, wherein the value of the logical channel ID field is a third value; the data sub-header does not carry any other field; and the data field carries data of a fixed length.

10. An electronic device, comprising:
one or more processors; and
a memory having one or more programs stored therein, wherein the one or more programs, when executed by the one or more processors, cause the one or more processors to perform the data processing method of any of claims 1 to 9.

11. A computer-readable storage medium, storing a computer program which, when executed by a processor, causes the processor to perform the data processing method of any of claims 1 to 9.
